# EUROPÄISCHE PATENTSCHRIFT

(11) **EP 0 652 190 B1**
(45) Veröffentlichungstag und Bekanntmachung des Hinweises auf die Patenterteilung: **03.03.1999**
(21) Anmeldenummer: 94117591.1
(22) Anmeldetag: 08.11.1994
(51) Int. Cl.: C04B 35/634, C04B 35/638, B22F 3/22, C04B 35/565

(54) **Verfahren zur Herstellung von Sinterformteilen**
Process for the preparation of sintered ceramic bodies
Procédé de préparation de corps frittés moulés

(30) Priorität: 08.11.1993 DE 4338122
(43) Veröffentlichungstag der Anmeldung: 10.05.1995
(73) Patentinhaber: BASF Aktiengesellschaft, 67063 Ludwigshafen (DE)
(72) Erfinder: Trübenbach, Peter, Dr., D-67065 Ludwigshafen (DE); McKee, Graham Edmund, Dr., D-69469 Weinheim (DE); Wohlfromm, Hans, Dr., D-67059 Ludwigshafen (DE)

(56) Entgegenhaltungen:
- EP-A- 0 413 231
- EP-A- 0 444 475
- EP-A- 0 595 099
- DE-A- 4 314 694

## Beschreibung

Die vorliegende Erfindung betrifft ein verbessertes Verfahren zur Herstellung von keramischen Sinterformteilen mit einem Gehalt an feinverteiltem Kohlenstoff durch Verformen eines Gemisches aus einem keramischen Pulver und Polyoxymethylen mit einem zusätzlichen Gehalt an einem polymeren Kohlenstoff-Precursor, Entbinderung und Sinterung.

Es war bekannt, beim Sintern von keramischen Pulvern oder Pulvermischungen aus z.B. SiC, WC, TiC, TaC, ZrC, SiO₂, TiO₂ oder metallischen Pulvern oder Pulvermischungen aus z.B. Fe oder niedrig legierten Stählen, fein verteilten Kohlenstoff in Form von Graphit oder Ruß als Sinteradditiv oder als Reaktionspartner zu verwenden.

So ist in US 4 295 890 und US 4 004 934 beschrieben, daß Siliciumcarbidkeramik mit elementarem Kohlenstoff und bor- oder aluminiumhaltigen Verbindungen drucklos oder unter Anwendung von Druck bei 1900°C bis 2300°C gesintert wird. Der Zusatz von etwa 2 Gew.-% Kohlenstoff beseitigt während des Sinterprozesses die aus SiO₂ bestehende Oberflächenschicht der Siliciumcarbidpulverteilchen und begünstigt durch Reaktion mit SiO₂ zu feinem SiC den Festphasensinterprozeß von SiC.

Bei Verwendung von elementarem Kohlenstoff, wie Graphit, Ruß, Koks gibt es auch Probleme bei der gleichmäßigen agglomeratfreien Verteilung des Kohlenstoffs. Besonders bei Verwendung von Ruß wird wegen seiner hohen spezifischen Oberfläche die Fließfähigkeit von Spritzgießmassen in nachteiliger Weise beeinflußt.

Um hochwertige keramische oder metallische Formteile zu erhalten, ist deshalb eine homogene Verteilung des Kohlenstoffs erforderlich. Deshalb wurden zu diesem Zweck schon in US 4 004 934 unter Inertgas zu Kohlenstoff pyrolysierbare Harze, wie Phenolharze, Polyesterharze oder Epoxidharze als Kohlenstoff liefernde Verbindungen vorgeschlagen.

Die EP-A 413 231 lehrt ein Verfahren zur Herstellung von anorganischen Sinterformteilen, wobei Grunkörper aus sinterbaren Pulvern und Polyoxymethylen oder einem Copolymerisat mit überwiegenden Anteilen an Oxymethyleneinheiten als Binder durch Extrusion, Spritzgießen oder Strangpressen geformt werden. Das Bindemittel wird aus diesen Grünteilen durch Behandlung mit einer gasförmigen Säure oder gasförmigem Bortrifluorid schnell, rißfrei und verzugsfrei entfernt.

DE-A-4 235 429 (äquivalent zu EP-A-595 099) und DE-A-4 314 694 lehren Zusammensetzungen aus sinterfähigen Pulvern und thermoplastischen, Polyoxymethylen enthaltenden Bindern sowie Verfahren zur Umwandlung dieser Zusammensetzungen in Sinterformteile durch Spritzguß, säurekatalysierte Entbinderung und Sinterung; wobei die Entbinderung bei reduziertem Druck oder/und durch Verwendung einer festen, sublimierbaren Säure als Katalysator durchgeführt wird.

EP-A-444 475 lehrt thermoplastische Massen zur Herstellung keramischer Formkörper und ein Verfahren zur Umwandlung dieser Massen in keramische Sinterformteile durch Spritzguß, säurekatalysierte Entbinderung und Sinterung. Die dort offenbarten Massen enthalten ein sinterfähiges anorganisches, nichtmetallisches Pulver, einen auf Polyoxymethylen basierenden, säurekatalysiert abbaubaren Binder und Dispergierhilfsmittel, wobei dem Binder zur Verbesserung der Spritzgußeigenschaften der Massen, insbesondere zur Vermeidung der Rißbildung, als eine von mehreren Alternativen Phenoxyharze zugegeben werden.

Beim Verformen des aus keramischen Pulvern und Polyoxymethylen bestehenden Feedstocks bei Temperaturen um 170°C können aber durch thermische Zersetzung von Polyoxymethylen geringe, unterhalb des MAK-Wertes liegende Mengen an Formaldehyd entstehen. Diese Mengen reichen bereits aus, um die genannten Kohlenstoff liefernden Verbindungen, wie Phenolharze, Epoxidharze oder Furanharze zu vernetzen. Durch die Vernetzung der Kohlenstoff liefernden Verbindungen wird die Viskosität des Feedstocks erhöht, was - durch die dadurch bewirkte höhere Temperatur - eine verstärkte Formaldehydentwicklung und die vollständige Verfestigung des Feedstocks in der Apparatur zur Folge hat.

Weiterhin sind Polyester üblicherweise mit den auf Polyoxymethylen basierenden keramischen Feedstocks nicht homogen mischbar.

Der vorliegenden Erfindung lag nun die Aufgabe zugrunde, ein Verfahren zu finden, mit dem eine Zusammensetzung, die ein sinterfähiges, anorganisches, nichtmetallisches Pulver, einen auf Polyoxymethylen basierenden, säurekatalysiert abbaubaren Binder sowie gegebenenfalls Hilfsstoffe umfaßt, zu einem keramischen Sinterkörper umgewandelt werden kann, wobei die Zusammensetzung nach Formgebung und säurekatalysierter Entbinderung, aber vor Sinterung zum Sinterformteil, einen einstellbaren Gehalt an feinverteiltem Kohlenstoff aufweist.

Diese Aufgabe wurde gelöst mit einem Verfahren zur Herstellung von Sinterformteilen durch Verformen eines Gemisches aus
a) einem keramischen Pulver und
b) Polyoxymethylen und/oder einem Copolymerisat mit überwiegenden Anteilen an Oxymethyleneinheiten

zu einem Grünkörper, Entfernen des Bindemittels durch Behandlung mit einer gasförmigen Säure und Sintern, wobei man dem Gemisch aus a) und b) einen Thermoplasten c) zusetzt, der bei Temperaturen von 90 bis 220°C geschmolzen vorliegt, mit b) mischbar und beständig ist und mit Formaldehyd keine Vernetzungsreaktion eingeht, das dadurch gekennzeichnet ist, daß man vor der Sinterung einen Pyrolyseschnitt zur Umwandlung des Thermoplasten c) in feinverteilten Kohlenstoff durchführt.

In den für das erfindungsgemäße Verfahren verwendeten Gemischen beträgt der Anteil der Komponente c) vorzugsweise 4 bis 12 und besonders bevorzugt 6 bis 10 Gew.-%, bezogen auf die Komponente a).

Die erfindungsgemäß zu verwendenden, bei der Pyrolyse Kohlenstoff liefernden thermoplastischen Polymere c), die von dem Binder b) verschieden sind, sind vor allem hochkohlenstoffhaltige Polymere, ausgewählt aus der Gruppe bestehend aus Polycarbonaten und vorzugsweise Polyethern, vorzugsweise mit einem hohen Gehalt an aromatischen Ringen, insbesondere Polyether, die sich vom Bisphenol A und einer aliphatischen Diolkomponente ableiten.

Es ist ein besonderer Vorteil dieser thermoplastischen Polymere, daß sie im aufgeschmolzenen Zustand bei Temperaturen von 160 bis 220°C, bevorzugt 165°C bis 200°C vollständig mit dem Bindersystem mischbar sind, d.h. eine einheitliche Schmelzphase bilden, so daß die C-Precursoren auf der anorganischen Pulveroberfläche homogen verteilt werden können, ohne den aus dem Stand der Technik bekannten Beschichtungsschritt mit Lösungsmittel durchführen zu

müssen. Diese Polymere müssen oberhalb 90°C schmelzen und bis 220°C stabil sein. Ihre Molmasse soll in der Regel 5000 bis 140 000, vorzugsweise 10 000 bis 20 000, betragen.

Polycarbonate sind Polyester der Kohlensäure mit Diolen, vorzugsweise aromatischen Diolen wie Bisphenol A.

Besonders bevorzugt sind Polyether der Formel 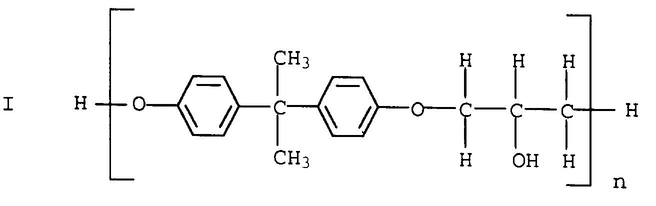 in der n 20 bis 500 bedeutet und die gemäß H.F. Mark, N. G. Gaylord a. N.B. Bikales, Encyclopedia of polymer science and technology, Vol. 10, Phenoxy Resins: p. 111-122, Interscience Publishers, New York, erhältlich sind, wobei bezüglich einzelner Eigenschaften auf diese Literaturstelle Bezug genommen wird.

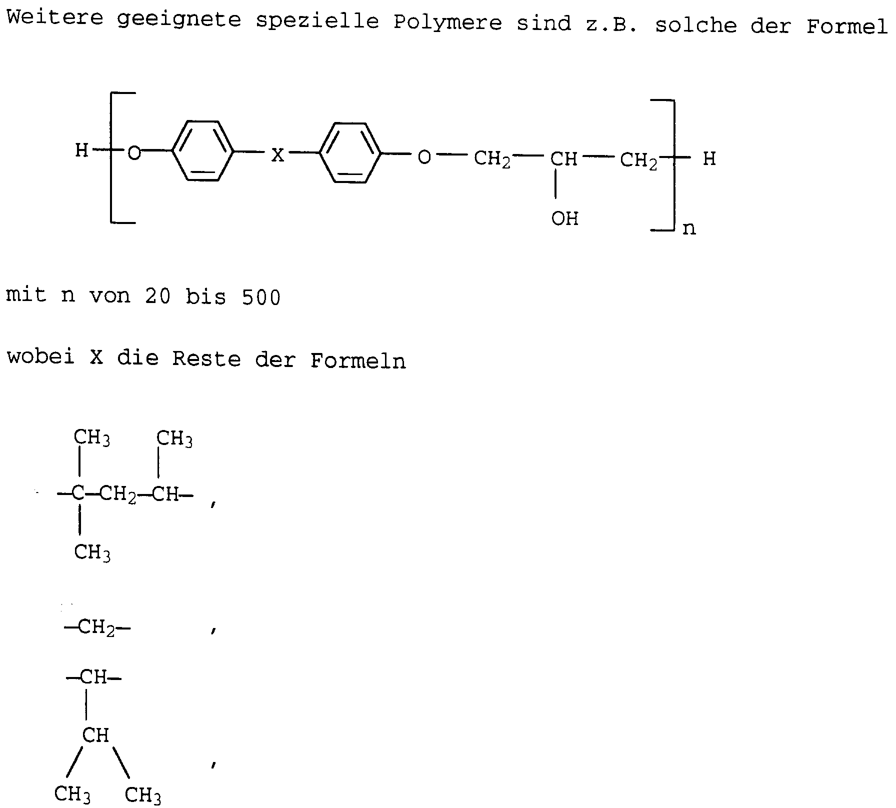

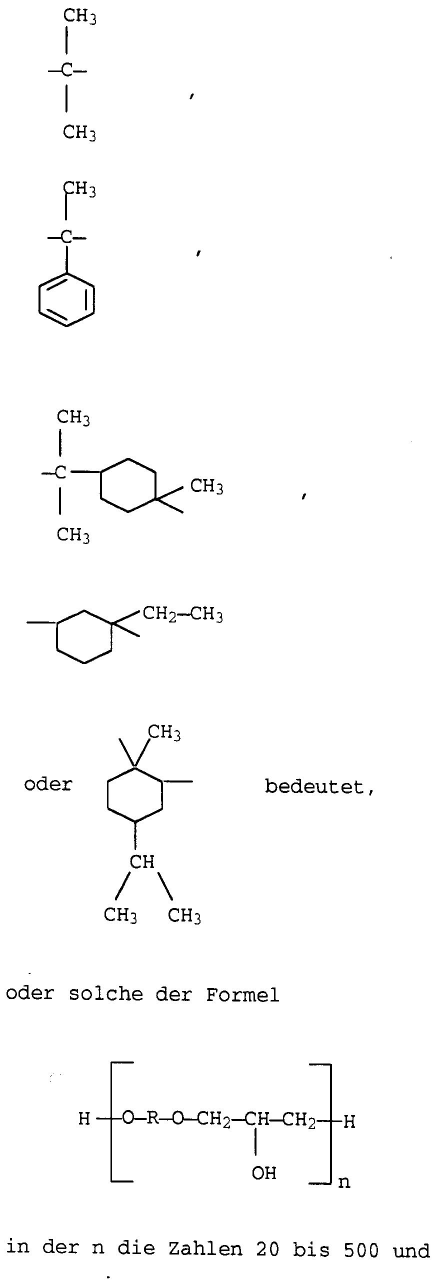

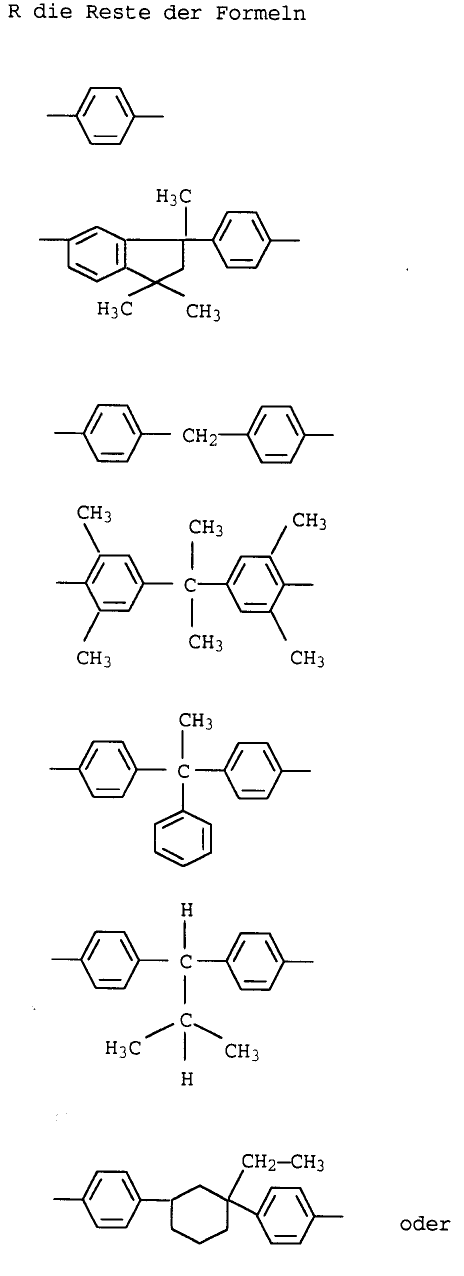

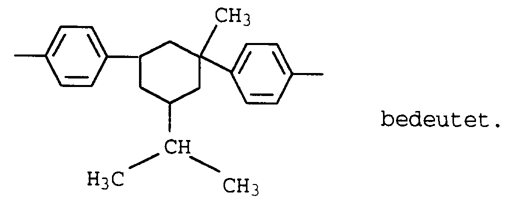

Die Kohlenstoff-Ausbeute der genannten Phenoxy-Harze beträgt 10 - 35 Gew.-%. Die kohlenstoffbildenden Thermoplaste werden in einem bestimmten Verhältnis zum keramischen Pulver eingearbeitet, wobei die eingesetzte Menge zwischen 0,1 und 15 Gew.-%, bezogen auf die Menge des eingesetzten keramischen Pulvers, liegt.

Als Sinterpulver für das erfindungsgemäße Verfahren kommen keramische Pulver wie SiC, WC, TiC, TaC, ZrC, SiO₂ oder TiO₂ in Betracht. Selbstverständlich können auch Mischungen dieser Materialien verwendet werden.

Die Korngröße der verwendbaren keramischen Pulver erstreckt sich von nanokristallinen Pulvern ab 0,005 µm bis 10 µm, vorzugsweise von 0,1 µm bis 5 µm, besonders bevorzugt von 0,2 bis 2 µm.

Die erfindungsgemäß zu verwendenden Binder, bestehend z.B. aus Polyoxymethylen, das vorteilhaft eine Molmasse von 10.000 bis 500.000 aufweist. Neben Homopolymerisaten von Formaldehyd oder Trioxan kommen auch Copolymerisate aus Trioxan mit z.B. cyclischen Ethern wie Ethylenoxid und 1,3-Dioxolan oder Formalen wie Butandiolformal in Betracht, wobei die Mengen der Copolymeren im allgemeinen bei 1 bis 4 Gew.-% der Polymeren liegen.

Weiterhin können den Massen anorganische Fasern oder Whisker aus z.B. SiC zugesetzt werden. Sie können außerdem Hilfsmittel, wie Dispergatoren bzw. Schmiermittel, wie Polyethylenglykol oder weitere thermoplastische Binder, wie Polyethylen, Polymethylmethacrylat oder Polyethylenoxid oder Homopolymere von 1,3-Dioxolan oder Formalen wie Butandiolformal enthalten. Die Menge an Hilfsmittel liegt in der Regel zwischen 0,1 und 12 Gew.-% der Gesamtmasse.

Eine Mischung aus anorganischen Pulver, Binder und dem C-Precursor wird in üblichen Apparaten wie Kneter oder Extruder bei Temperaturen von 160 bis 220°^{C,} bevorzugt 165 bis 200°C aufgeschmolzen, wobei Binder und C-Precursor eine einheitliche Schmelzphase bilden.

Nach Vermischen aller Komponenten, z.B. in einem Kneter oder Extruder, werden die Massen verformt, z.B. durch Spritzgießen bei Temperaturen von 160°C bis 200°C und Drücken von 500 bis 2000 bar. Dabei können geringe Mengen an Formaldehyd entstehen.

Die so erhaltenen Grünkörper werden einer gasförmigen, säurehaltigen Atmosphäre ausgesetzt. Dabei wird der Binder zu gasförmigen Produkten, vorzugsweise Formaldehyd abgebaut. Die Temperatur der Bindemittelentfernung beträgt im allgemeinen 100°C bis 160°C, wobei man bevorzugt unter der Erweichungstemperatur des Binders bleibt.

Das in den entbinderten Teilen verbleibende obengenannte Phenoxy-Harz wird unter Inertgas, wie z.B. Stickstoff oder Argon bei mindestens 600°C zu fein verteiltem Kohlenstoff pyrolysiert.

### Beispiele

### Beispiel 1

20 mg UCAR® Phenoxy Resin PKHH, ein Polymer der Formel I, wurden in einer Thermowaage mit 10 K/min unter Argon auf 900°C erhitzt. Nach 2 h Haltezeit blieb ein Kohlenstoffrückstand von 24 % zurück.

### Beispiel 2

Die in der Tabelle angegebenen Mengen an Phenoxy Harz UCAR® PHENOXY RESIN PKHH der Union Carbide Deutschland GmbH wurden mit 1000 g SiC mit einer durchschnittlichen Korngröße von 0,4 µm und 4 g Bor mit einer Korngröße von 0,8 µm und mit einem Polyoxymethylencopolymer (POM/PBDF) aus Trioxan und 2 Gew.-% Butandiolformal mit einem durchschnittlichen Molekulargewicht von 150.000 sowie mit 2 Gew.-% Polyethylenglykol (PEG) mit einem Molekulargewicht von 800 als Schmiermittel verknetet und durch Spritzgießen zu Stäben der Abmessungen 5 x 6 x 65 mm³ verarbeitet.

**Tabelle**

| Nr. | Phenoxy [%] | Harz [g] | POM/PBDF [g] | PEG [g] | Cₚ [%] | Cₛ [%] | Dₛ [g/cm³] |
|---|---|---|---|---|---|---|---|
| 1 | 10 | 100 | 284 | 28 | 3,3 | 1,0 | 3,19 |
| 2 | 15 | 150 | 226 | 28 | 4,3 | 1,3 | 3,20 |
| 3 | 20 | 200 | 168 | 27 | 6,6 | 3,6 | 2,75 |
| [%]: Gewichtsprozent, bezogen auf eingesetztes SiC Cₚ : Gehalt an freiem Kohlenstoff nach Pyrolyse Cₛ : Gehalt an freiem Kohlenstoff nach Sintern Dₛ : Sinterdichte | | | | | | | |

Die Stäbe wurden bei Normaldruck und 135°C mit 80 g Oxalsäure und 500 l/h Stickstoff als Inertgas 4 Stunden lang entbindert.

Nach Aufheizen mit 5°C/min auf 800°C und einer Haltezeit von 2 Std. unter Argon wurden die in der Tabelle aufgeführten freien Kohlenstoffgehalte (Cₚ) analysiert.

Nach dem Sintern der pyrolysierten Stäbe bei 2100°C unter Ar resultierten die in der Tabelle angegebenen freien Kohlenstoffgehalte (Cₛ) und Sinterdichten (Dₛ).

Die freien Kohlenstoffgehalte der pyrolysierten und gesinterten SiC-Proben wurden nach DIN 51 075 analysiert.

Das eingesetzte SiC-Pulver hatte einen freien Kohlenstoffgehalt von 0,9 % und einen Sauerstoffgehalt von 2,0 %. Zum erfolgreichen Sintern werden nach der Pyrolyse etwa 3 % freier Kohlenstoff benötigt. Die theoretische Dichte von SiC beträgt 3,22 g/cm³.

## Patentansprüche

1. Verfahren zur Herstellung von Sinterformteilen durch Verformen eines Gemisches aus
a) einem keramischen Pulver und
b) Polyoxymethylen und/oder einem Copolymerisat mit überwiegenden Anteilen an Oxymethyleneinheiten
zu einem Grünkörper, Entfernen des Bindemittels durch Behandlung mit einer gasförmigen Säure und Sintern, wobei man dem Gemisch aus a) und b) einen Thermoplasten c) zusetzt, der bei Temperaturen von 90°C bis 220°C geschmolzen vorliegt, mit b) mischbar und beständig ist und mit Formaldehyd keine Vernetzungsreaktion eingeht, dadurch gekennzeichnet, daß man vor der Sinterung einen Pyrolyseschnitt zur Umwandlung des Thermoplasten c) in feinverteilten Kohlenstoff durchführt.

2. Verfahren zur Herstellung von Sinterformteilen nach Anspruch 1, dadurch gekennzeichnet, daß man als Thermoplast ein Phenoxy-Harz der allgemeinen Formel I verwendet, 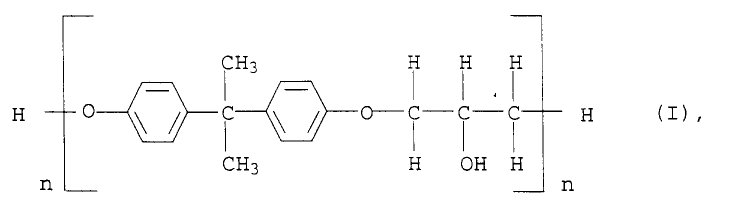 in der n 20 bis 500 bedeutet.

3. Verfahren zur Herstellung von Sinterformteilen nach Anspruch 1, dadurch gekennzeichnet, daß man als keramisches Pulver SiC, WC, TiC, TaC, ZrC, SiO₂ und/oder TiO₂ verwendet.

4. Verfahren zur Herstellung von Sinterformteilen nach Anspruch 1, dadurch gekennzeichnet, daß man als keramisches Pulver α-SiC und/oder β-SiC verwendet.

5. Verfahren zur Herstellung von Sinterformteilen nach Anspruch 1, dadurch gekennzeichnet, daß man die Pyrolyse bei Temperaturen von 600 bis 1500°C unter Inertgas durchführt.

6. Verfahren zur Herstellung von Sinterformteilen nach Anspruch 1, dadurch gekennzeichnet, daß man die Pyrolyse bei Temperaturen von 600 bis 1200°C unter Inertgas durchführt.

## Claims

1. A process for producing shaped sintered parts by shaping a mixture of
a) a ceramic powder and
b) polyoxymethylene and/or a copolymer containing a predominant proportion of oxymethylene units
to give a green body, removing the binder by treatment with a gaseous acid and sintering, where there is added to the mixture of a) and b) a thermoplastic c) which is molten at from 90°C to 220°C, is miscible with and stable to b) and does not undergo a crosslinking reaction with formaldehyde, wherein a pyrolysis step is carried out prior to the sintering in order to convert the thermoplastic c) into finely divided carbon.

2. A process for producing shaped sintered parts as claimed in claim 1, wherein the thermoplastic used is a phenoxy resin of the general formula I 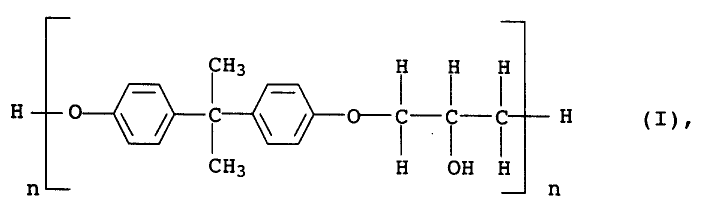 where n is from 20 to 500.

3. A process for producing shaped sintered parts as claimed in claim 1, wherein SiC, WC, TiC, TaC, ZrC, SiO₂ and/or TiO₂ are used as ceramic powder.

4. A process for producing shaped sintered parts as claimed in claim 1, wherein α-SiC and/or β-SiC are used as ceramic powder.

5. A process for producing shaped sintered parts as claimed in claim 1, wherein the pyrolysis is carried out at from 600 to 1500°C under inert gas.

6. A process for producing shaped sintered parts as claimed in claim 1, wherein the pyrolysis is carried out at from 600 to 1200°C under inert gas.

## Revendications

1. Procédé pour la production de pièces frittées par mise en forme d'un mélange de
a) une poudre céramique et
b) du polyoxyméthylène et/ou un copolymère ayant principalement des unités oxyméthylène
pour former un corps brut, élimination du liant par traitement avec un acide sous forme gazeuse et frittage, tandis qu'on ajoute au mélange de a) et b) une matière thermoplastique c), qui se présente à l'état fondu à des températures de 90°C à 220°C, est miscible avec b) et stable et ne donne lieu à aucune réaction de réticulation avec le formaldéhyde, caractérisé par le fait que, avant le frittage, on met en oeuvre une étape de pyrolyse pour transformer la matière thermoplastique c) en carbone finement divisé.

2. Procédé pour la production de pièces frittées selon la revendication 1, caractérisé par le fait qu'on utilise comme matière thermoplastique une résine phénoxy de formule générale I, 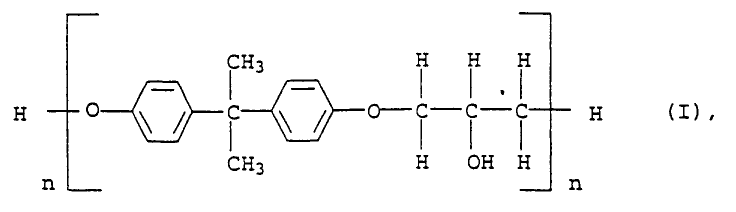 où n vaut de 20 à 500.

3. Procédé pour la production de pièces frittées selon la revendication 1, caractérisé par le fait qu'on utilise comme poudre céramique SiC, WC, TiC, TaC, ZrC, SiO₂ et/ou TiO₂.

4. Procédé pour la production de pièces frittées selon la revendication 1, caractérisé par le fait qu'on utilise comme poudre céramique α-SiC et/ou β-SiC.

5. Procédé pour la production de pièces frittées selon la revendication 1, caractérisé par le fait qu'on effectue la pyrolyse à des températures de 600 à 1500°C sous gaz inerte.

6. Procédé pour la production de pièces frittées selon la revendication 1, caractérisé par le fait qu'on effectue la pyrolyse à des températures de 600 à 1200°C sous gaz inerte.
